# EUROPÄISCHE PATENTSCHRIFT

(11) **EP 3 095 121 B1**
(45) Veröffentlichungstag und Bekanntmachung des Hinweises auf die Patenterteilung: **17.01.2018**
(21) Anmeldenummer: 15703475.2
(22) Anmeldetag: 21.01.2015
(51) Int. Cl.: H01F 27/28, H01F 5/00, H01F 37/00, H01F 38/00, G01N 25/72, H05B 6/36

(54) **INDUKTOR**
INDUCTOR
INDUCTEUR

(30) Priorität: 06.02.2014 DE 102014202128
(43) Veröffentlichungstag der Anmeldung: 23.11.2016
(73) Patentinhaber: Siemens Aktiengesellschaft, 80333 München (DE)
(72) Erfinder: ROTHENFUSSER, Max, 81377 München (DE)
(86) Internationale Anmeldenummer: PCT/EP2015/051091
(87) Internationale Veröffentlichungsnummer: WO 2015/117820

(56) Entgegenhaltungen:
- EP-A2- 2 386 850
- DE-A1-102012 008 531
- DE-A1-102012 212 434

## Beschreibung

Die Erfindung betrifft einen Induktor für eine Induktionsthermographie.

Eine Methode zur Erkennung von Defekten eines Objektes, insbesondere eines Bauteils, ist die Induktionsthermographie. In der Induktionsthermographie wird mittels eines Induktors, der über das zu prüfende Objekt (Prüfobjekt) geführt wird, ein Induktionsstrom im Prüfobjekt angeregt. Ein Defekt im Prüfobjekt, insbesondere im Bauteil, führt zu einer lokalen Störung des Induktionsstromes und folgend zu einer lokalen Änderung der Erwärmung des Prüfobjektes durch ohmsche Verluste. Die Änderung der lokalen Erwärmung wird wiederum mit einer Infrarotkamera erfasst, so dass durch eine Auswertung des infraroten Abbildes, das mittels der Infrarotkamera aufgenommen wurde, eine Erkennung der Defekte ermöglicht wird.

Nach dem Stand der Technik werden die Induktoren zur Prüfung objektnahe oberhalb des Prüfobjekts angeordnet. Hierbei liegt die maximale Amplitude des im Prüfobjekt angeregten Induktionsstromes direkt unterhalb der Leiter des Induktors. Dadurch ergibt sich der Nachteil, dass eben dieser für die Erkennung von Defekten interessante Bereich durch die Leiter des Induktors überdeckt wird, so dass eine Aufnahme des Bereiches durch eine oberhalb des Induktors angeordnete Infrarotkamera kaum gelingen kann.

Ein weiterer Nachteil bekannter Induktoren ist die starke Abhängigkeit des Induktionsstromes an einem Ort des Prüfobjektes vom Abstand des Ortes vom Leiter des Induktors. Dadurch ergibt sich insbesondere um die Bereiche der maximalen Amplitude des Induktionsstromes eine inhomogene Verteilung der Amplitude, die eine sichere Erkennung von Defekten und deren Größe erschwert.

DE 10 2012 212 434 A1 offenbart einen Induktor für eine Induktionsthermographie gemäss Oberbegriff von Anspruch 1.

EP 2 386 850 A2 und DE 10 2012 008 531 A1 offenbaren weitere Induktoren für eine Induktionsthermographie.

Der vorliegenden Erfindung liegt folglich die Aufgabe zugrunde, einen Induktor für eine Induktionsthermographie anzugeben, der die genannten Nachteile des Standes der Technik vermeidet.

Die Aufgabe wird durch eine Anordnung mit den Merkmalen des unabhängigen Anspruches 1 und durch ein Verfahren mit den Merkmalen des unabhängigen Anspruches 8 gelöst. In den abhängigen Ansprüchen sind vorteilhafte Ausgestaltungen und Weiterbildungen der Erfindung angegeben.

Der erfindungsgemäße Induktor für eine Induktionsthermographie ist wenigstens in einem Teilbereich als rechteckförmig gewundener Leiter ausgebildet, wobei der Leiter wenigstens eine geschlossene Leiterschleife umfasst, die abgesehen von einem Leiter, der die Leiterschleife ausbildet, frei von elektrischen Bauelementen ist.

Durch die wenigstens eine Leiterschleife des Leiters bzw. des Induktors bildet sich erfindungsgemäß ein Sichtfenster aus, das für die thermographische Aufnahme eines Abbildes der Wärmeverteilung eines Prüfobjektes vorteilhaft ist. Beispielsweise kann die Aufnahme durch eine Infrarotkamera erfolgen, die das Sichtfenster zur Aufnahme nutzt. Erfindungsgemäß wird somit ein Bereich der maximalen Amplitude des Induktionsstromes erfasst. Eine Abdeckung des Bereiches durch den Leiter des Induktors wird somit vermieden. Eine Mehrzahl von Leiterschleifen kann vorgesehen sein. Die Leiterschleife des erfindungsgemäßen Induktors weist außer dem elektrischen Leiter, welcher die Leiterschleife ausbildet, und dessen elektrischen Eigenschaften, keine weiteren elektrischen Bauteile, beispielsweise zusätzliche Widerstände, Induktivitäten und/oder Kapazitäten, auf.

Ein weiterer besonderer Vorteil der inneren geschlossen Leiterschleife ist, dass die Amplitude des Induktionsstromes in ihrem maximalen Bereich homogenisiert wird. Dadurch ergibt sich innerhalb der Leiterschleife und somit im Bereich des Sichtfensters ein im Wesentlichen homogener räumlicher Verlauf der Amplitude des Induktionsstromes und somit des Induktionsstromes insgesamt (im Allgemeinen weist der Induktionsstrom eine Amplitude und eine Phase auf). Hierbei entspricht das Sichtfenster im Wesentlichen dem Bereich der maximalen Amplitude des Induktionsstromes. Durch die erfindungsgemäße räumliche Homogenisierung des Induktionsstromes wird die Erkennbarkeit von Defekten des Prüfobjektes verbessert und bleibt zudem im Bereich des Sichtfensters nahezu konstant. Ein weiterer Vorteil der Homogenisierung des Induktionsstromes ist, dass ein Wärmefluss senkrecht zum Leiter des Induktors reduziert wird, so dass Wärmestaus an Kanten, Ecken oder Grenzflächen des Prüfobjektes verringert werden. Weiterhin wird durch die Leiterschleife der Bereich der maximalen Amplitude des Induktionsstromes vergrößert. Dadurch wird vorteilhafterweise der für die Auswertung nutzbare Aufnahmebereich einer Infrarotkamera vergrößert.

Bei dem erfindungsgemäßen Verfahren zum Betrieb eines Induktors für eine Induktionsthermographie, wird ein wenigstens in einem Teilbereich rechteckförmig gewundener Leiter mit einem Wechselstrom durchflossen, wobei entlang des Leiters der Wechselstrom mittels einer Leiterschleife in zwei parallel verlaufende Teilwechselströme aufgeteilt wird.

Vorteilhafterweise sind die Teilwechselströme in der Leiterschleife in Phase. Somit ergibt sich, insbesondere auf einer dem Prüfobjekt zugewandten Unterseite des Induktors, eine konstruktive Überlagerung der durch die Teilwechselströme erzeugten Induktionsströme. Eine alternative Betrachtungsweise ist die Sicht auf die Magnetfelder. Die durch die Teilwechselströme erzeugten Magnetfelder sind insbesondere auf der dem Prüfobjekt zugewandten Unterseite in Phase, so dass sich eine konstruktive Überlagerung (Verstärkung) der Magnetfelder ergibt, die ebenso zu der zuvor beschriebenen Überlagerung der Induktionsströme führt.

Gemäß einer vorteilhaften Ausgestaltung der Erfindung umfasst die Leiterschleife wenigstens zwei beabstandet angeordnete Teilleiter, wobei die zwei Teilleiter einen konstanten Abstand zueinander aufweisen.

Durch den konstanten Abstand der zwei Teilleiter ist der Induktionsstrom innerhalb des Sichtfensters vorteilhafterweise annähernd homogen, wodurch die Erkennbarkeit und Vergleichbarkeit von Defekten des Prüfobjektes verbessert wird.

Gemäß einer vorteilhaften Ausgestaltung der Erfindung umfasst die Leiterschleife zwei mit konstantem Abstand beabstandete Teilleiter, die im Wesentlichen vollständig eine Seite des durch den Leiter gebildeten Rechteckes ausbilden.

Dadurch ergibt sich vorteilhafterweise ein vergrößertes Sichtfenster, so dass der Aufnahmebereich der Infrarotkamera erweitert ist.

Der Abstand der zwei gleichmäßig beabstandeten Teilleiter ist dem Zweck anzupassen. Ein kleiner Abstand führt zu einer größeren Homogenisierung als ein großer Abstand. Ein großer Abstand vergrößert das Sichtfenster und somit den Aufnahmebereich. Hierbei ist unter einem kleinen Abstand ein Abstand zu verstehen, der kleiner als eine für die räumliche Variation der Amplitude der Teilinduktionsströme typische Breite ist, wobei die räumliche Variation der Amplituden der Teilinduktionsströme senkrecht zu den Teilleitern für den Vergleich heranzuziehen ist. Die Teilinduktionsströme sind die Induktionsströme, die jeder einzelne Teilleiter im Prüfobjekt anregt.

Gemäß einer weiteren vorteilhaften Ausgestaltung ist die eine Seite als eine Längsseite des rechteckig gewundenen Leiters ausgebildet.

Dadurch wird vorteilhafterweise das Sichtfenster weiter vergrößert, so dass ein größer Bereich des Prüfobjektes durch die Infrarotkamera erfasst wird.

In einer vorteilhaften Weiterbildung der Erfindung sind die einzelnen Teilleiter der Leiterschleife ellipsensegmentartig gewunden.

Zunächst lassen sich zwei Arten von ellipsensegmentartig gewundenen bzw. gebogenen Teilleitern unterscheiden. Gemäß einer ersten Art sind die Teilleiter in einer Ebene in der der rechteckförmige Teilbereich des Leiters liegt ellipsensegmentartig gewunden. Gemäß einer zweiten Art sind die Teilleiter in einer Ebene senkrecht zur Ebene in der der rechteckförmige Teilbereich des Leiters liegt ellipsensegmentartig gewunden.

Bei der erstgenannten Art bilden die Teilleiter aus einer Beobachtungsrichtung betrachtet einen Ellipsenbogen, insbesondere einen Ellipsenhalbbogen aus, wobei der Bogen mit dem rechteckförmigen Teilbereich des Leiters im Wesentlichen in einer Ebene liegt. Mit anderen Worten setzen die Teilleiter den rechteckförmigen Teilbereich des Leiters als eine ellipsenbogenartige Ausbeulung der einen Seite des Leiters fort. Dadurch ergibt sich ein Sichtfenster, das insbesondere für gebogene Teilbereich eines Prüfobjektes und/oder gebogene Prüfobjekte, deren zu prüfende Oberfläche aber im wesentlich eben ist, von Vorteil ist. Beispielsweise ist ein Induktor der erst genannten Art zur Prüfung eines Bauteils einer Verbrennungskammer einer Gasturbine von Vorteil.

Gemäß der zweitgenannten Art erscheint die Leiterschleife aus der Beobachtungsrichtung betrachtet rechteckförmig. Durch die ellipsensegmentartigen Teilleiter ergibt sich nun ein nicht verdrehtes, zum Prüfobjekt hin- oder vom Prüfobjekt weggebogenes Sichtfenster. Durch die Biegung des Sichtfensters und dem dieser Biegung entsprechenden ellipsensegmentartigen Verlauf der Teilleiter wird ein Induktor für Prüfobjekte ermöglicht, deren zu prüfende Oberfläche im Wesentlichen nur in einer Richtung gekrümmt sind. Die Richtung der Krümmung der Oberfläche korrespondiert zur Biegung des Sichtfensters, so dass die Biegung bzw. die flächenartige Krümmung des Sichtfensters die Krümmung der Oberfläche nachempfindet. Die Teilleiter der Leiterschleife weisen somit einen nahezu konstanten Abstand zum Prüfobjekt auf, so dass der Einfluss der Krümmung der zu prüfenden Oberfläche auf die Amplitude des Induktionsstromes durch eine dieser Krümmung nachempfunden Krümmung des Sichtfensters kompensiert wird. Insbesondere zur Prüfung von Turbinenschaufeln ist ein Induktor mit einem nach der genannten Art gekrümmten Sichtfenster von Vorteil.

Gemäß einer vorteilhaften Ausgestaltung der Erfindung ist die Leiterschleife rechteckförmig gewunden.

Hierbei weist die Leiterschleife, betrachtet aus der Beobachtungsrichtung der Infrarotkamera, eine Rechteckform auf. Durch die Rechteckform der Leiterschleife wird ein zweckmäßiges rechteckförmiges Sichtfenster ermöglicht. Ein zusätzlich flaches bzw. ebenes rechteckförmiges Sichtfenster ist bei Prüfobjekten bevorzugt, deren Oberfläche im Wesentlich eben ist. Insbesondere ist hier eine rechteckförmige Leiterschleife von Vorteil, die mit dem rechteckförmigen Teilbereich des Leiters in einer Ebene liegt. Bei Prüfobjekten, deren zum Induktor zugewandte Oberfläche gekrümmt ist, ist eine gleichsam gekrümmte Leiterschleife bevorzugt. Trotz der zur gekrümmten Oberfläche des Prüfobjektes hin- und/oder weggewundenen Form oder Krümmung der Leiterschleife besitzt die Leiterschleife aus der Beobachtungsrichtung der Infrarotkamera betrachtet eine Rechteckform.

Gemäß einer vorteilhaften Weiterbildung umfasst der Induktor wenigstens zwei elektrische Anschlüsse.

Dadurch kann der Induktor mit einer externen Quelle zur Strom- und/oder Spannungsversorgung kontaktiert werden. Vorteilhafterweise liegen die elektrischen Anschlüsse der einen Seite des Induktors gegenüber und verlaufen senkrecht zu den Teilleitern der einen Seite. Insgesamt ist der Induktor somit als flacher rechteckförmig gewundener Leiter ausgebildet, wobei die eine Seite des Leiters durch zwei parallel beabstandete Teilleiter gedoppelt ist.

Gemäß einer vorteilhaften Ausgestaltung der Erfindung liegt eine Frequenz des Wechselstromes im Frequenzbereich von 100 kHz bis 500 kHz.

Dadurch ergibt sich gemäß dem Skin-Effekt eine vorteilhafte Eindringtiefe des Induktionsstromes in das Prüfobjekt. Beispielsweise liegen die Eindringtiefen (Skin-Tiefen) typischerweise im Bereich von 0,05 mm (ferromagnetischer Stahl) bis 2 mm (Edelstahl).

Gemäß einer weiteren vorteilhaften Ausgestaltung der Erfindung beträgt eine Stromstärke des Wechselstromes wenigstens 1000 A.

Durch die hohe Stromstärke des Wechselstromes von wenigstens 1000 A ergeben sich entsprechend starke Magnetfelder, die wiederum hohe Induktionsströme im Prüfobjekt anregen. Dadurch wird vorteilhafterweise die Erfassung von Defekten des Prüfobjektes durch die Infrarotkamera erleichtert und verbessert.

Die Erfindung wird nachfolgend anhand von drei bevorzugten Ausführungsbeispielen unter Bezugnahme auf die angehängten Zeichnungen beschrieben, in der
- Figur 1: einen rechteckförmig gewundenen Induktor mit einer rechteckförmigen Leiterschleife zeigt, wobei die Leiterschleife zwei parallel beabstandete Teilleiter aufweist;
- Figur 2: eine räumliche Variation der Amplitude des Induktionsstromes verdeutlicht;
- Figur 3: eine dreidimensionale Darstellung eines rechteckförmig gewundenen Induktors mit einer Leiterschleife zeigt, wobei die Teilleiter der Leiterschleife ellipsensegmentartig gewunden sind; und
- Figur 4: eine dreidimensionale Darstellung eines reckteckförmigen Induktors mit einer rechteckförmig gewundenen und flächenartig gekrümmten Leiterschleife zeigt.

Gleichartige Elemente werden in den Figuren mit denselben Bezugszeichen versehen.

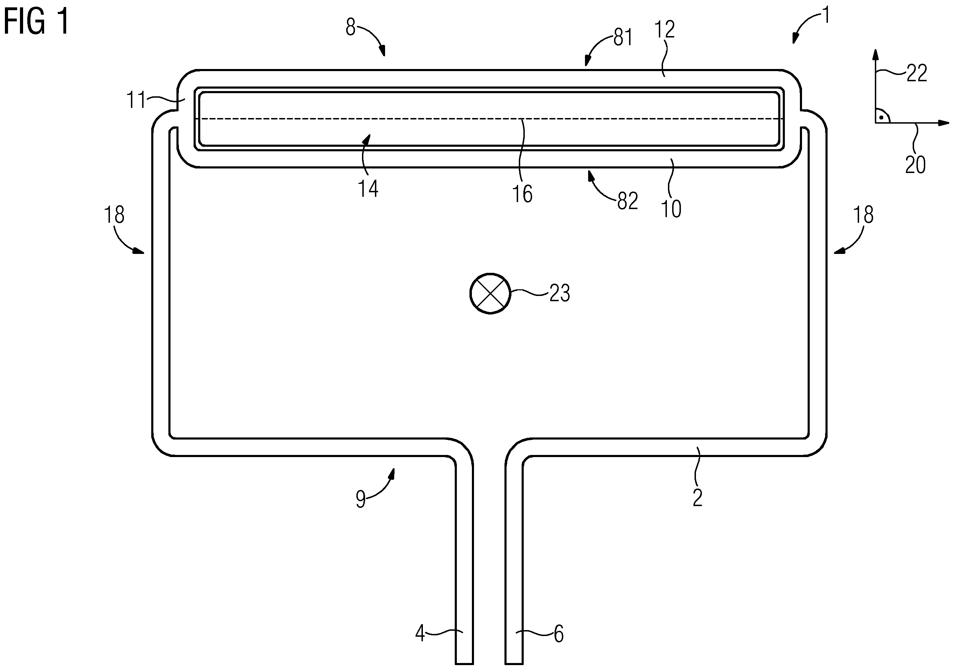

Figur 1 zeigt einen Induktor 1, der als ein rechteckförmig gewundener Leiter 2 ausgebildet ist, und dessen erste Längsseite 8 eine geschlossene Leiterschleife 11 aufweist. Die Leiterschleife 11 ist im Wesentlichen als ein Rechteck mit zwei parallelen Längsseiten 81, 82 ausgebildet, wobei die Längsseiten 81, 82 aus zwei parallel beabstandet angeordneten Teilleitern 10, 12 gebildet sind und im Wesentlichen vollständig die erste Längsseite 8 des Leiters 2 ausbilden. Hierbei verlaufen die Teilleiter 10, 12 nahezu vollständig entlang der ersten Längsseite 8. Der ersten Längsseite 8 liegt parallel beabstandet eine zweite Längsseite 9 gegenüber, die zwei elektrische Anschlüsse 4, 6 umfasst. Hierbei verlaufen die elektrischen Anschlüsse 4, 6 senkrecht zu den Längsseiten 8, 9 und parallel zu den Breitseiten 18 des Leiters 2.

Durch die Leiterschleife 11 bildet sich ein Sichtfenster 14 innerhalb des Induktors 1 aus, das für eine Aufnahme der Wärmeverteilung eines Prüfobjektes mittels einer nicht dargestellten Infrarotkamera genutzt wird. Der Induktor 1 lässt sich somit gedanklich aus einer Verdopplung eines Leiters 16 eines schlicht rechteckig gewundenen Leiters bilden. Mit anderen Worten wird die Leiterschleife 11 aus einer Parallelschaltung der zwei Teilleiter 11, 12 ausgebildet.

Generell weist die Leiterschleife 11 keinen zusätzlichen elektrischen Widerstand auf, wobei unter einem zusätzlichen Widerstand jeder elektrische Widerstand zu verstehen ist, der über den elektrischen Leitungswiderstand der Leiterschleife 11 hinausgeht.

Die Teilleiter 10, 12 verlaufen parallel zu einer Richtung 20 (x-Richtung). Dadurch ist die Amplitude des Induktionsstromes entlang der Richtung 20 nahezu konstant. In einer zur Richtung 20 senkrechten Richtung 22 (y-Richtung) ist die Amplitude des Induktionsstromes über den Bereich des Sichtfensters 14 durch die Dopplung des Leiters 2 in die zwei Teilleiter 10, 12 im Wesentlichen konstant.

Typischerweise wird der in Figur 1 dargestellte Induktor 1 über ein nicht in Figur 1 gezeigtes Prüfobjekt geführt. Hierbei ist ein Abstand von weniger als 1 cm zwischen Induktor 1 und Prüfobjekt vorgesehen. Das Prüfobjekt liegt bezogen auf eine z-Richtung, die antiparallel zu einer Beobachtungsrichtung 23 der Infrarotkamera ist, unterhalb des Induktors 1, wobei der Induktor 1 in der in Figur 1 dargestellten Weise zwischen Prüfobjekt und Infrarotkamera angeordnet ist. Die Wärmeverteilung auf dem Prüfobjekt wird dann durch das Sichtfenster 14 mittels der Infrarotkamera erfasst.

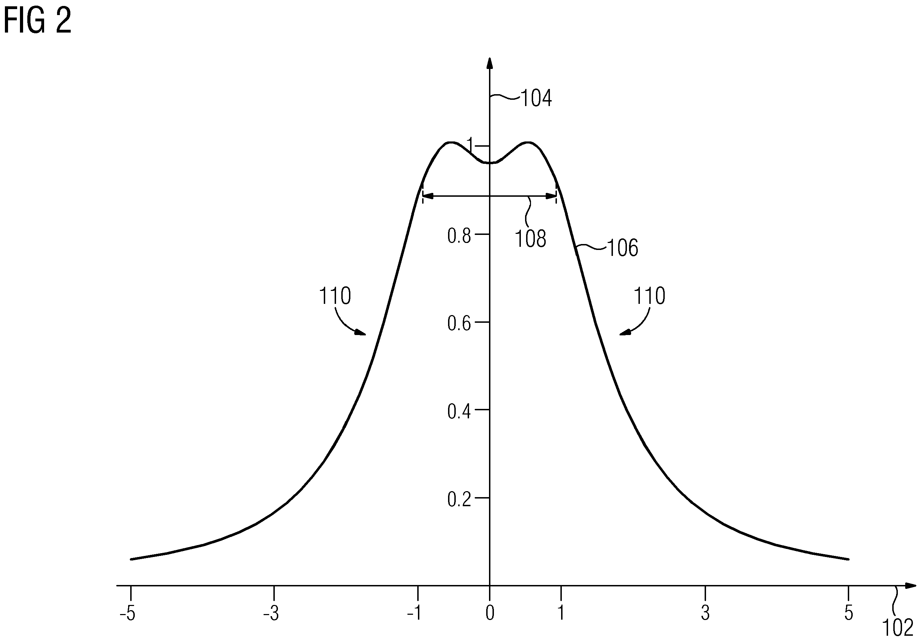

Figur 2 zeigt die räumliche Variation der Amplitude 106 des Induktionsstromes entlang der Richtung 22. Hierbei ist an der Abszisse 102 der relative Abstand (mit Vorzeichen) entlang der Richtung 22 aufgetragen, wobei der Nullwert des relativen Abstandes dem gedachten Leiter 16 entspricht. Die Teilleiter 10, 12 weisen einen betragsmäßig gleichen Abstand zum gedachten Leiter 16 auf, so dass der gedachte Leiter 16 mittig zwischen den zwei Teilleitern 10, 12 liegt. An der Ordinate 104 ist die auf ihr Maximum normierte Amplitude 106 des Induktionsstromes aufgetragen.

Deutlich ist der homogene Bereich 108 zu erkennen, der im Wesentlichen der Breite des Sichtfensters 14 entlang der Richtung 22 entspricht. Zwar findet sich im homogenen Bereich 108 eine kleine Variation der Amplitude 106 des Induktionsstromes, diese ist aber im Vergleich zu den stark abfallenden Flanken 110 der Amplitude 106 zu vernachlässigen. Für einen nach dem Stand der Technik bekannten rein rechteckig gewundenen Induktor, dessen Leiter insbesondere dem gedachten Leiter 16 folgt, wäre der homogene Bereich 18 im Wesentlichen zu einem Punkt entartet.

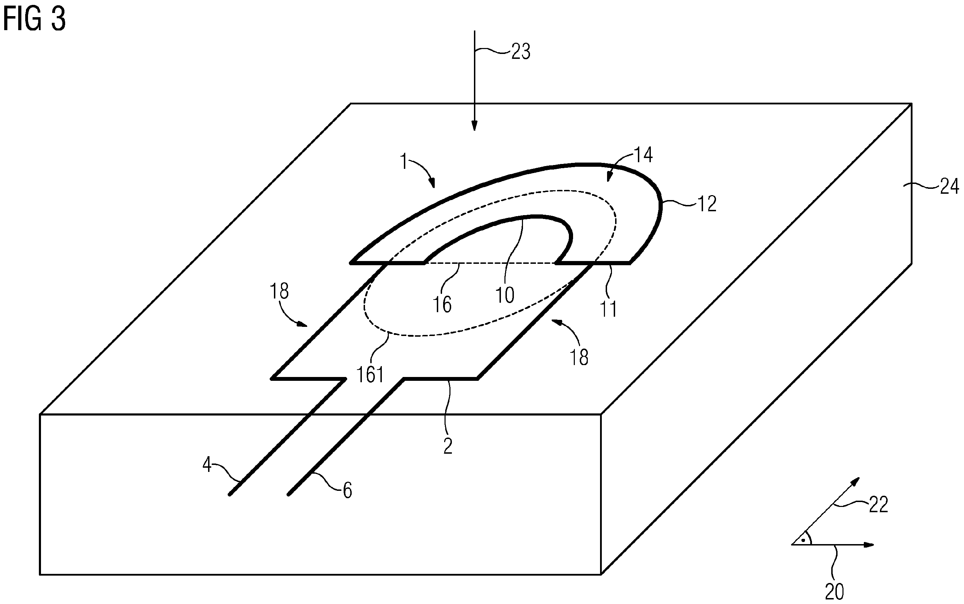

In Figur 3 ist eine dreidimensionale Darstellung eines Induktors 1 gezeigt, dessen Leiterschleife 11 entlang eines Ellipsenbogens 161 verläuft. Hierbei sind die Teilleiter 10, 12 ellipsensegmentartig gewunden und liegen mit konstantem Abstand beabstandet in einer Ebene mit dem rechteckförmigen Teilbereich des Leiters 2. Die Teilleiter 10, 12 bilden somit eine in der genannten Ebene liegende ellipsensegmentartige Ausbeulung des Leiters 2 bzw. des Induktors 1 aus. Wiederum liegt der Induktor 1 bezogen auf die z-Richtung, die antiparallel zur Beobachtungsrichtung 23 der Infrarotkamera ist, oberhalb des Prüfobjektes 24, wobei der Induktor 1 in der in Figur 3 dargestellten Weise zwischen dem Prüfobjekt 24 und der nicht gezeigten Infrarotkamera angeordnet ist.

Durch die beabstandet angeordneten und ellipsensegmentartig gewundenen Teilleiter 10, 12 wird ein gebogenes, ellipsenförmiges Sichtfenster 14 ausgebildet, dass besonders für ellipsensegmentartig gebogene Teilbereich eines Prüfobjektes und/oder gebogene Prüfobjekte bevorzugt ist. Generell kann das Sichtfenster 14 durch eine Anordnung der Teilleiter 10, 12 jeder beliebigen geometrischen Form eines Prüfobjektes angepasst werden.

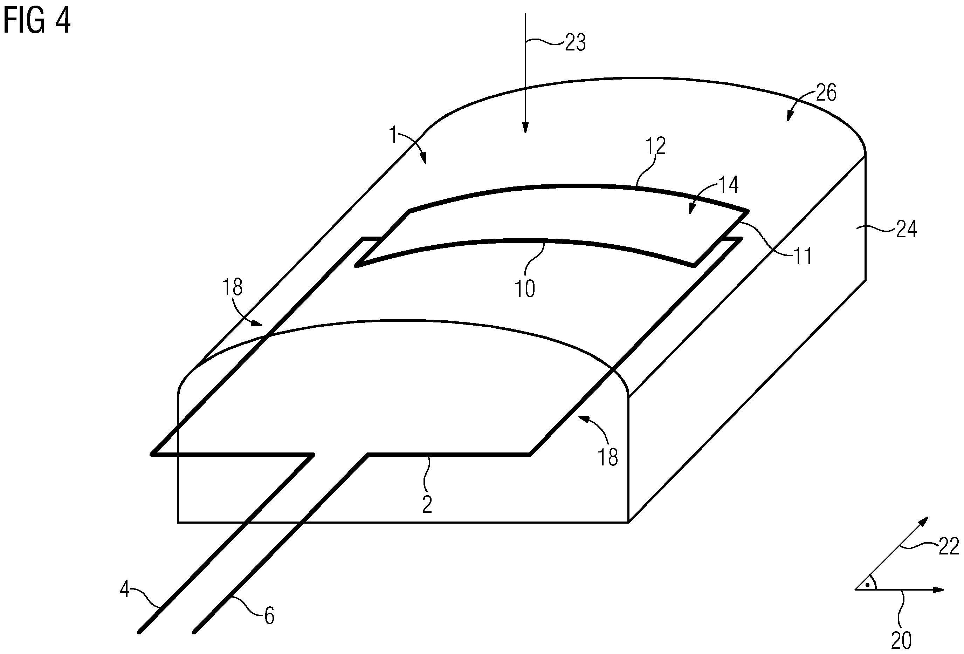

Figur 4 zeigt einen Induktor 1, dessen Leiterschleife 2 aus einer Sicht parallel zur Beobachtungsrichtung 23 rechteckförmig ausgebildet ist. Grundsätzlich gleicht der hier gezeigte Induktor 1 somit dem in Figur 1 dargestellten. Allein das Sichtfenster 14 weist durch die ellipsensegmentartig gewundenen Teilleiter 10, 12 eine zum Prüfobjekt hin gekrümmte Form auf.

Im Gegensatz zu Figur 3 sind die Teilleiter 10, 12 nicht in der Ebene des rechteckförmig gewundenen Leiters 2 ellipsensegmentartig gewunden, sondern in einer zur genannten Ebene senkrechten Ebene. Das Sichtfenster 14 und die gewundene Leiterschleife 11 gleichen daher anschaulich einem nicht verdrehten gebogen Rechteck, das zum Prüfobjekt 24 hingebogen ist. Durch die Biegung des Sichtfensters 14 ist das Sichtfenster 14 an die gekrümmte Oberfläche 26 des Prüfobjektes 24 angepasst. Die Anpassung ist in dem Sinne zu verstehen, dass der Abstand der Teilleiter 10, 12 von der gekrümmten Oberfläche 26 des Prüfobjektes 24 im Wesentlichen konstant ist.

## Patentansprüche

1. Induktor (1) für eine Induktionsthermographie, der wenigstens in einem Teilbereich als rechteckförmig gewundener Leiter (2) ausgebildet ist, **dadurch gekennzeichnet, dass** der Leiter (2) eine geschlossene Leiterschleife (11) umfasst, die abgesehen von einem Leiter, welcher die Leiterschleife (11) ausbildet, frei von elektrischen Bauelementen ist.

2. Induktor (1) gemäß Anspruch 1, **dadurch gekennzeichnet, dass** die Leiterschleife (11) zwei beabstandet angeordnete Teilleiter (10, 12) umfasst, wobei die zwei Teilleiter (10, 12) einen konstanten Abstand zueinander aufweisen.

3. Induktor (1) gemäß Anspruch 2, **dadurch gekennzeichnet, dass** die Teilleiter (10, 12) im Wesentlichen vollständig eine Seite (8) des durch den Leiter (2) gebildeten Rechteckes ausbilden.

4. Induktor (1) gemäß Anspruch 3, **dadurch gekennzeichnet, dass** die eine Seite (8) als eine Längsseite (8) des rechteckig gewundenen Leiters (2) ausgebildet ist.

5. Induktor (1) gemäß Anspruch 2, **dadurch gekennzeichnet, dass** die einzelnen Teilleiter (10, 12) der Leiterschleife (11) ellipsensegmentartig gewunden sind.

6. Induktor (1) gemäß einem der vorangegangen Ansprüche, **dadurch gekennzeichnet, dass** die Leiterschleife (11) rechteckförmig gewunden ist.

7. Induktor (1) gemäß einem der vorangegangen Ansprüche, mit zwei elektrischen Anschlüssen (4, 6).

8. Verfahren zur Verwendung eines Induktors (1) für eine Induktionsthermographie, bei dem ein wenigstens in einem Teilbereich rechteckförmig gewundener Leiter (2) des Induktors mit einem Wechselstrom durchflossen wird, wobei entlang des Leiters (2) der Wechselstrom mittels einer Leiterschleife (11) in zwei parallel verlaufende Teilwechselströme aufgeteilt wird.

9. Verfahren gemäß Anspruch 8, bei dem eine Frequenz des Wechselstroms im Frequenzbereich von 100 kHz bis 500 kHz liegt.

10. Verfahren gemäß Anspruch 8 oder 9, bei dem eine Stromstärke des Wechselstroms wenigstens 1000 A beträgt.

## Claims

1. Inductor (1) for induction thermography, which is configured at least in a subregion as a rectangularly wound conductor (2), **characterized in that** the conductor (2) comprises a closed conductor loop (11) which, apart from a conductor which forms the conductor loop (11), is free of electrical components.

2. Inductor (1) according to Claim 1, **characterized in that** the conductor loop (11) comprises two elementary conductors (10, 12) arranged at a distance from one another, the two elementary conductors (10, 12) having a constant distance from one another.

3. Inductor (1) according to Claim 2, **characterized in that** the elementary conductors (10, 12) essentially fully form one side (8) of the rectangle formed by the conductor (2).

4. Inductor (1) according to Claim 3, **characterized in that** the one side (8) is configured as a longitudinal side (8) of the rectangularly wound conductor (2).

5. Inductor (1) according to Claim 2, **characterized in that** the individual elementary conductors (10, 12) of the conductor loop (11) are wound in elliptical segment fashion.

6. Inductor (1) according to one of the preceding claims, **characterized in that** the conductor loop (11) is rectangularly wound.

7. Inductor (1) according to one of the preceding claims, having two electrical terminals (4, 6).

8. Method for using an inductor (1) for induction thermography, wherein an alternating current flows through a conductor (2) of the inductor which is wound rectangularly at least in a subregion, the alternating current being divided along the conductor (2)
by means of a conductor loop (11) into two elementary alternating currents flowing in parallel.

9. Method according to Claim 8, wherein a frequency of the alternating current lies in the frequency range of from 100 kHz to 500 kHz.

10. Method according to Claim 8 or 9, wherein a current strength of the alternating current is at least 1000 A.

## Revendications

1. Inducteur (1) pour une thermographie par induction, qui est constitué, au moins dans une région partielle, sous la forme d'un conducteur (2) contourné en forme de rectangle, **caractérisé en ce que** le conducteur (2) comprend une boucle (11) de conducteur fermée, qui, abstraction faite d'un conducteur formant la boucle (11) de conducteur, est exempt de composant électrique.

2. Inducteur (1) suivant la revendication 1, **caractérisé en ce que** la boucle (11) de conducteur comprend deux sous-conducteurs (10, 12) disposés à distance, les deux sous-conducteurs (10, 12) ayant, l'un par rapport à l'autre, une distance constante.

3. Inducteur (1) suivant la revendication 2, **caractérisé en ce que** les sous-conducteurs (10, 12) constituent, sensiblement complètement, un côté (8) du rectangle formé par le conducteur (2).

4. Inducteur (1) suivant la revendication 3, **caractérisé en ce qu'**un côté (8) est constitué sous la forme d'un grand côté (8) du conducteur (2) contourné en forme de rectangle.

5. Inducteur (1) suivant la revendication 2, **caractérisé en ce que** les divers sous-conducteurs (10, 12) de la boucle (11) de conducteur sont contournés en forme de segment d'ellipse.

6. Inducteur (1) suivant l'une des revendications précédentes, **caractérisé en ce que** la boucle (11) de conducteur est contournée en forme de rectangle.

7. Inducteur (1) suivant l'une des revendications précédentes, comprenant deux bornes (4, 6) électriques.

8. Procédé d'utilisation d'un inducteur (1) pour une thermographie par induction, dans lequel on fait passer un courant alternatif dans un conducteur (2), conformé en forme de rectangle au moins dans une région partielle, de l'inducteur, dans lequel on subdivise, le long du conducteur (2), le courant alternatif au moyen d'une boucle (11) de conducteur, en deux sous-courants alternatifs s'étendant parallèlement.

9. Procédé suivant la revendication 8, dans lequel une fréquence du courant alternatif est dans la plage de fréquence de 100 kHz à 500 kHz.

10. Procédé suivant la revendication 8 ou 9, dans lequel une intensité du courant alternatif est d'au moins 1000 A.
